# EUROPÄISCHE PATENTSCHRIFT

(11) **EP 2 650 440 B1**
(45) Veröffentlichungstag und Bekanntmachung des Hinweises auf die Patenterteilung: **15.08.2018**
(21) Anmeldenummer: 13001824.5
(22) Anmeldetag: 09.04.2013
(51) Int. Cl.: E01C 19/48

(54) **Straßenfertiger mit verstellbarem Bedienpult**
Road finisher with adjustable control panel
Finisseuse de route dotée d'un pupitre de commande réglable

(30) Priorität: 13.04.2012 DE 202012003790 U
(43) Veröffentlichungstag der Anmeldung: 16.10.2013
(73) Patentinhaber: Joseph Vögele AG, 67067 Ludwigshafen (DE)
(72) Erfinder: Herzberg, Ingo, 74918 Angelbachtal (DE)
(74) Vertreter: Grünecker Patent- und Rechtsanwälte PartG mbB

(56) Entgegenhaltungen:
- DE-U1- 29 915 965
- US-A1- 2004 035 238
- US-B1- 6 223 620
- Joseph Vögele Ag: "Radfertiger SUPER 1603-2", , September 2010 (2010-09), XP002763966, Gefunden im Internet: URL:http://media.voegele.info/media/03_voe gele/produkte/broschueren/03_radfertiger/s uper_1603-2_1/pb_super_16032/PB_SUPER_1603 _2_DE.pdf [gefunden am 2016-11-09]

## Beschreibung

Die Erfindung bezieht sich auf eine Bedienpultverstellung für einen Straßenfertiger, mit der ein Bedienpult um eine Schwenkachse geschwenkt werden kann.

Eine Bedienpultverstellung für Straßenfertiger ist beispielsweise aus der DE 299 15 965 U1 bekannt. Das darin beschriebene Bedienpult verfügt über eine Querführung, mit dem das Bedienpult in Querrichtung des Straßenfertigers verschoben werden kann. Weiter kann das Bedienpult in der Tiefe, d. h. in oder entgegen der Fahrtrichtung des Straßenfertigers verstellt werden. Außerdem verfügt das Bedienpult über eine Drehverstellvorrichtung, die das Drehen des Bedienpults um eine mittig angeordnete Drehachse gestattet.

Gattungsgemäße Straßenfertiger sind aus dem Produktprogramm der Anmelderin bekannt, z. B. aus der Produktbroschüre "Radfertiger SUPER 1603-2".

Aufgabe der vorliegenden Erfindung ist es, einen Straßenfertiger mit einem um eine Schwenkachse schwenkbaren Bedienpult zur Verfügung zu stellen, bei dem mit konstruktiv möglichst einfachen Mitteln eine möglichst ergonomische Verstellung ermöglicht wird.

Diese Aufgabe wird gelöst durch einen Straßenfertiger mit den Merkmalen des Anspruchs 1. Vorteilhafte Weiterbildungen der Erfindung sind in den Unteransprüchen angegeben.

Der erfindungsgemäße Straßenfertiger verfügt über ein wahlweise um eine erste und eine zweite Schwenkachse schwenkbaren Bedienpult, wobei für die erste und die zweite Schwenkachse jeweils ein Bedienelement zum separaten Entriegeln und/oder Verriegeln einer Schwenkbarkeit um die jeweilige Schwenkachse vorgesehen ist. Die Erfindung zeichnet sich dadurch aus, dass für jedes der Bedienelemente ein Gegenlager an dem Bedienpult befestigt ist, das als Auflage für einen Daumen oder einen Handballen dient, wenn das Bedienelement betätigt wird, und dass die Schwenkachsen durch ein Heranziehen des jeweiligen Bedienelements in Richtung des jeweiligen Gegenlagers entriegelbar und das Bedienpult in dieselbe Richtung verschwenkbar ist. Dies ermöglicht eine besonders ergonomische und sinnfällige bzw. intuitive Verstellung des Bedienpults. Denn durch das fest am Bedienpult angeordnete Gegenlager ist die Richtung, in die das Bedienelement bewegt werden muss, vorgegeben.

Um eine besonders ergonomische Ausrichtung des verschwenkten Bedienpults zu erreichen, können die erste und die zweite Schwenkachse parallel zueinander ausgerichtet sein.

Vorteilhaft ist es, wenn die erste und die zweite Schwenkachse jeweils ein Gleitelement aufweisen, das in einer Kulisse geführt ist. Dies ermöglicht eine besonders leichtgängige und unkomplizierte Verstellbarkeit des Bedienpults, da der Bediener des Straßenfertigers die Schwenkbewegung einfach entlang der Kulisse führt. Um die Reibung zwischen den Kulissen und den Gleitelementen möglichst gering zu gestalten, können die jeweiligen Oberflächen eine Beschichtung aus einer Nickel-PTFE-Dispersion (beispielsweise AHK NanoDisp-PTFE) aufweisen.

Zweckmäßig ist es, wenn die Bedienelemente für die erste und die zweite Schwenkachse separat bedienbar sind, da der Fahrzeuglenker so die Möglichkeit hat, die Anzahl der Freiheitsgrade, in die das Bedienpult verstellbar ist, selbst zu bestimmen. Dadurch können unbeabsichtigte Schwenkbewegungen des Bedienpults vermieden werden.

Für den Betrieb des Straßenfertigers ist es zweckmäßig, wenn das Bedienpult in der Querrichtung des Straßenfertigers entlang von Schienen seitenverstellbar ist. Dies ermöglicht eine gute Ergonomie für den Fahrzeuglenker, wobei durch die Schienenführung gleichzeitig eine sichere und robuste Seitenverstellbarkeit des Bedienpults gewährleistet ist.

Vorteilhaft ist es, wenn das Bedienpult auch in axialer Richtung wenigstens entlang von einer der Achsen höhenverstellbar ist. Damit kann das Bedienpult an die Körpergröße des Bedieners angepasst werden.

Es ist ebenso vorteilhaft, wenn die Schwenkachsen durch ein Wegdrücken des jeweiligen Bedienelements von dem wenigstens einen Gegenlager weg verriegelbar sind. Somit wird ein unbeabsichtigtes Entriegeln der Schwenkachsen durch ein Anstoßen des Bedienelements vermieden.

Das Bedienpult weist erfindungsgemäß einen Hauptträger, eine Konsole und pro Schwenkachse wenigstens ein Verbindungselement auf. Dies ermöglicht möglichst viele Freiheitsgrade zur Verstellung des Bedienpults und damit ein Höchstmaß an Ergonomie.

Dabei ist durch das Entriegeln der Schwenkbarkeit um die jeweilige Schwenkachse der Hauptträger relativ zu der Konsole bewegbar.

Die Bedienelemente erstrecken sich erfindungsgemäß über eine Länge, die im Wesentlichen der Bauhöhe des Hauptträgers entspricht. Dies bietet dem Fahrzeuglenker eine große Angriffsfläche, um das Bedienpult in eine bestimmte Schwenkrichtung zu drücken und/oder zu ziehen.

Es ist zweckmäßig, wenn die Schwenkachsen weitgehend symmetrisch zu einer Mittelachse des Bedienpults ausgerichtet sind, um eine gute Ausrichtung des Bedienpults bezüglich des Straßenfertigers zu erhalten. Für eine möglichst gute Verstellbarkeit des Bedienpults ist es vorteilhaft, wenn das Bedienpult stufenlos verschwenkbar ist.

Im Folgenden wird ein vorteilhaftes Ausführungsbeispiel der Erfindung anhand einer Zeichnung näher dargestellt. Im Einzelnen zeigen:
- Figur 1: eine perspektivische Ansicht eines erfindungsgemäßen Bedienpults,
- Figur 2: eine weitere perspektivische Ansicht des erfindungsgemäßen Bedienpults,
- Figur 3: eine Vorderansicht des erfindungsgemäßen Bedienpults,
- Figur 4: eine perspektivische Ansicht eines Hauptträgers, eines Verbindungselements und einer Konsole des erfindungsgemäßen Bedienpults,
- Figur 5: eine Draufsicht auf den Hauptträger des erfindungsgemäßen Bedienpults in einer verriegelten Stellung,
- Figur 6: eine Draufsicht auf den Hauptträger des erfindungsgemäßen Bedienpults in einer teilweise entriegelten Stellung,
- Figur 7: eine Draufsicht auf den Hauptträger des erfindungsgemäßen Bedienpults in einer teilweise entriegelten Stellung und einer verschwenkten Position, und
- Figur 8: eine Draufsicht auf den Hauptträger und die Konsole des erfindungsgemäßen Bedienpults in einer verriegelten Stellung und in einer verschwenkten Position.

Gleiche Komponenten sind in den Figuren durchgängig mit gleichen Bezugszeichen versehen.

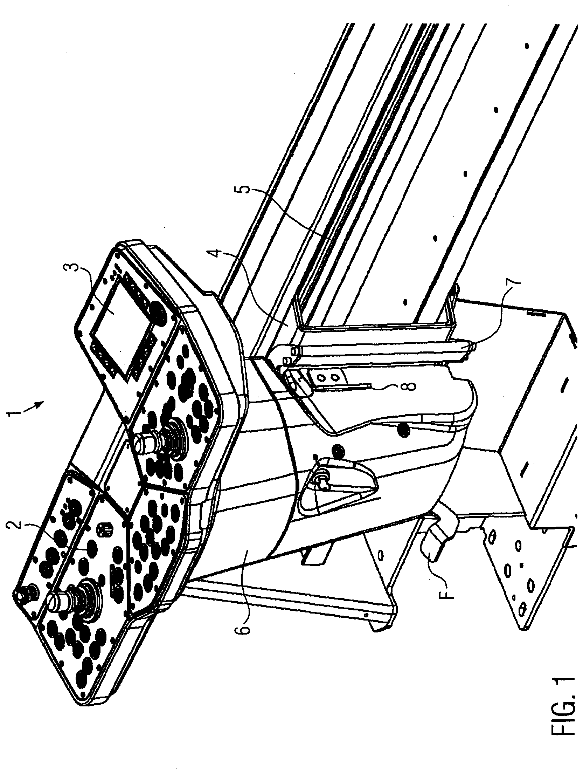

Figur 1 zeigt in perspektivischer Ansicht ein erfindungsgemäßes Bedienpult 1, das der Steuerung eines Straßenfertigers (nicht gezeigt) und seiner Arbeitskomponenten dient. Mittels des Bedienpults 1 kann der Straßenfertiger beispielsweise gesteuert bewegt werden.

Das Bedienpult 1 verfügt über eine Vielzahl von Steuerelementen 2 zur Steuerung des Straßenfertigers, beispielsweise Bedientasten und/oder Steuerknüppel. Zur Anzeige von Betriebsparametern des Straßenfertigers weist das Bedienpult 1 zudem wenigstens ein Anzeigefeld 3 auf.

Weiter ist in Figur 1 zu erkennen, dass das Bedienpult 1 mittels einer Konsole 4 an einem Schienensystem 5 des Straßenfertigers verschieb- und fixierbar befestigt ist. Das Schienensystem 5 ist fest am Straßenfertiger befestigt, beispielsweise in dessen Führerstand (nicht dargestellt). Die Konsole 4 ist weitgehend U-förmig ausgestaltet und gleitet an der Oberseite und der Unterseite des Schienensystems 5 entlang. Somit ist es möglich, die Konsole 4 und damit das gesamte Bedienpult 1 in einer Querrichtung des Straßenfertigers zu verstellen bzw. zu verschieben. Hierzu weisen die Oberflächen der zueinander beweglichen Elemente, insbesondere die Konsole 4 und das Schienensystem 5, eine Oberflächenbeschichtung auf, die die Reibung der Elemente deutlich reduziert. Beispielsweise kann diese Oberflächenbeschichtung eine Nickel-PTFE-Dispersion (beispielsweise AHK NanoDisp-PTFE) sein.

Weiter weist das Bedienpult 1 ein einteilig oder mehrteilig ausgestaltetes Verkleidungselement 6 auf, um die mechanischen und elektrischen Komponenten des Bedienpults 1 abzudecken und zudem vor äußeren Einflüssen zu schützen. Seitlich weist das Bedienpult 1 ein Bedienelement 7 auf, das sich entlang des Verkleidungselements 6 weitgehend vertikal erstreckt. In diesem Ausführungsbeispiel erstreckt sich das Bedienelement 7 über eine Länge, die mindestens der Breite des Schienensystems 5 entspricht, um dem Bediener des Straßenfertigers eine möglichst große Angriffsfläche zur Betätigung des Bedienelements 7 zu ermöglichen. So kann der Bediener das Bedienelement 7 mit beiden Händen greifen oder sich zusätzlich mit seinem Knie dagegen stämmen.

Ebenfalls zu erkennen ist ein Gegenlager 8, das ebenfalls seitlich an dem Bedienpult 1 oder dem Verkleidungselement 6 befestigt ist und in Greifnähe zu dem Bedienelement 7 angeordnet ist. Das Gegenlager 8 dient dem Bediener als Auflage für den Daumen oder dem Handballen, wenn der Bediener das Bedienelement 7 betätigt. Denn das Bedienelement 7 führt bei Betätigung entweder eine Schwenkbewegung zum Gegenlager 8 hin, oder von diesem weg aus. Die genaue Funktionsweise des Bedienelements 7 wird weiter unten ausführlich beschrieben.

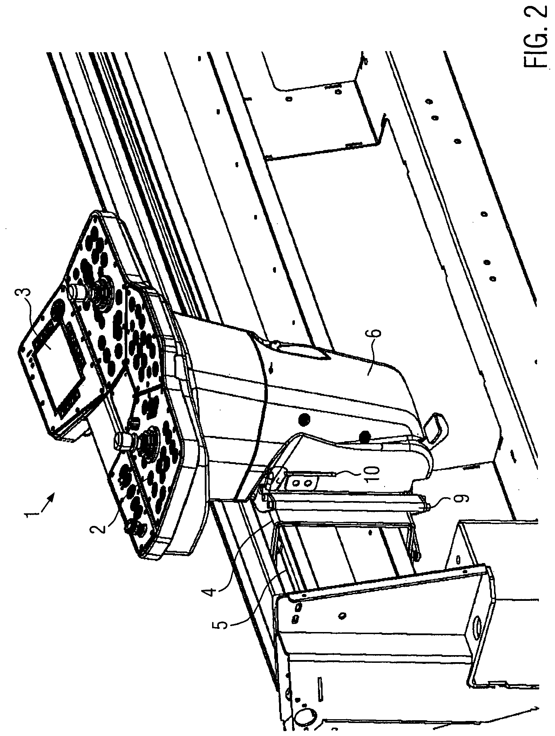

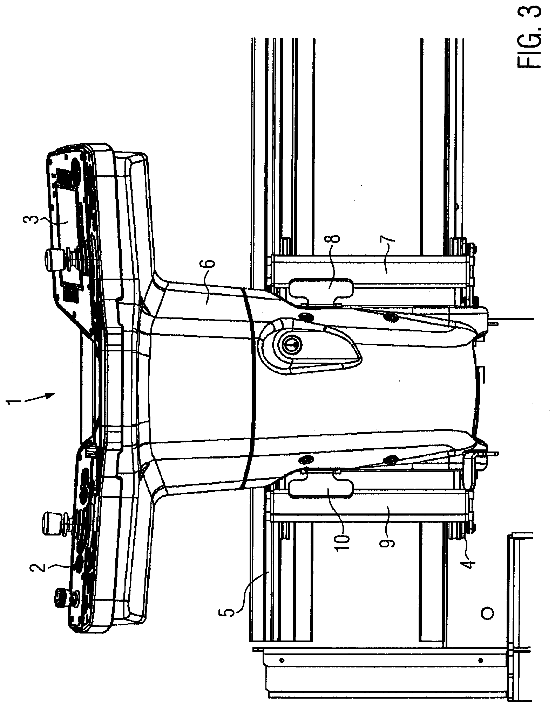

Figur 2 zeigt eine weitere, perspektivische Ansicht des erfindungsgemäßen Bedienpults 1. Gut zu erkennen ist ein weiteres Bedienelement 9, das sich auf der linken Seite des Bedienpults 1 bzw. des Verleidungselements 6 in weitgehend vertikaler Richtung an diesem entlang erstreckt. Die Bedienelemente 7, 9 sind etwa symmetrisch an dem Bedienpult 1 angeordnet. Auch auf der linken Seite weist das Bedienpult 1 ein Gegenlager 10 auf, das als Auflage für den Daumen oder dem Handballen des Bedieners bei Betätigung des Bedienelements 9 dient. Diese symmetrische Anordnung der Bedienelemente 7, 9 und der Gegenlager 8, 10 ist gut in Figur 3 zu erkennen, die eine Vorderansicht des Bedienpults 1 zeigt.

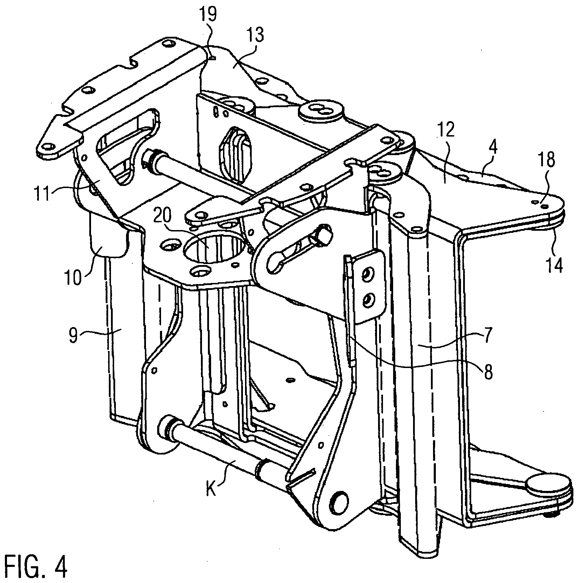

Figur 4 zeigt einen freigelegten Teil des Bedienpults 1 in einer perspektivischen Ansicht. Zu erkennen ist die Konsole 4 zur schienengeführten Befestigung des Bedienpults 1 am Straßenfertiger. Weiter ist ein Hauptträger 11 zu erkennen, an dem die Bedienelemente 7, 9 und die Gegenlager 8, 10 angeordnet sind. Zwischen den Bedienelementen 7, 9 und der Konsole 4 ist jeweils ein Verbindungsglied 12, 13 angeordnet, deren Funktion weiter unten genauer beschrieben wird.

Figur 4 zeigt ferner eine Kippachse K. Um diese horizontale Kippachse K ist das Bedienpult relativ zum Hauptträger 11 nach vorne kippbar, sobald der Bediener durch Betätigen einer Fußtaste F (siehe Figur 1) eine Verriegelung (nicht dargestellt) gelöst hat, die die Schwenkbarkeit des Bedienpults 1 lösbar verriegelt. Mittels der Verriegelung kann das Bedienpult 1 nach dem Loslassen der Fußtaste F entweder stufenlos oder in vorgegebenen Kippwinkeln relativ zur Kippachse K verriegelt werden.

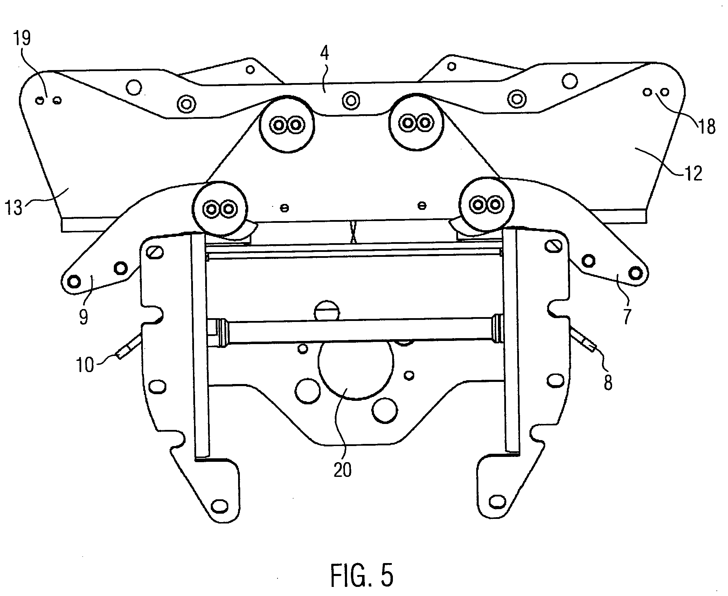

In Figur 5, die eine Draufsicht auf den Hauptträger 11, die Konsole 4 und die Verbindungsglieder 12, 13 zeigt, ist gut die symmetrische Anordnung der Bedienelemente 7, 9 an dem Hauptträger 11 zu erkennen. Dabei sind die Bedienelemente 7, 9 in einer unbetätigten Stellung dargestellt. D.h. dass die Verbindungsglieder 12, 13 durch die Bedienelemente 7, 9 fixiert und somit gegenüber der Konsole und/oder dem Hauptträger 11 unbeweglich sind. Die beweglichen Teile des Bedienpults verfügen über keinen Freiheitsgrad.

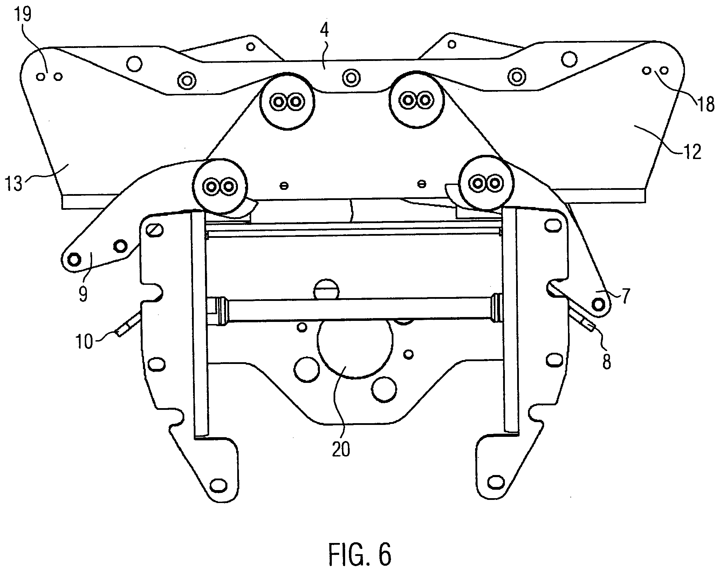

Figur 6 zeigt die Anordnung aus Figur 5 ebenfalls in der Draufsicht, wobei sich das rechte Bedienelement 7 nun in einer betätigten Stellung befindet. D.h., dass das Bedienelement 7 von dem Bediener des Straßenfertigers in Richtung des Gegenlagers 8 gezogen wurde, um das Verbindungsglied 12 zu lösen und ein Schwenken des Bedienpults 1 nach links zu ermöglichen, wie es weiter unten noch beschieben wird. Das linke Bedienelement 9 ist weiterhin fixiert und erlaubt keine Schwenkbewegung des Bedienpults 1 nach rechts.

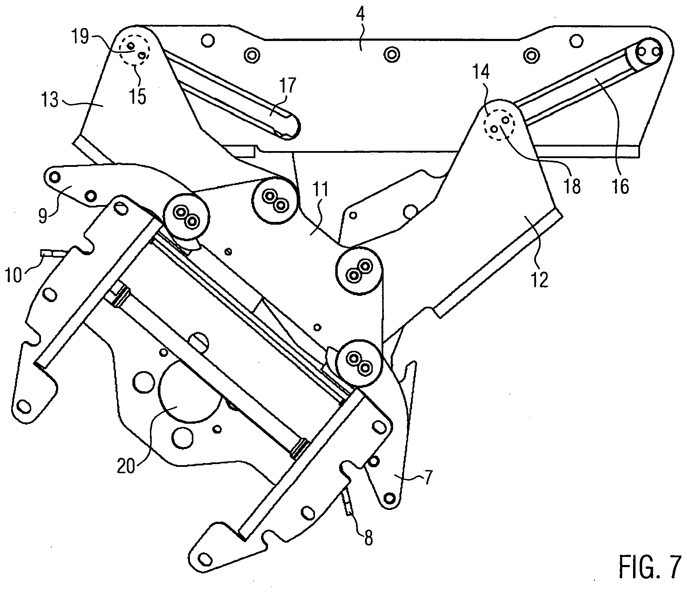

In Figur 7, die eine weitere Draufsicht auf den Hauptträger 11, die Konsole 4 und die Verbindungsglieder 12, 13 zeigt, ist das Bedienpult 1 in einer nach links geschwenkten Position dargestellt. Gut zu erkennen ist, dass jeweils ein Bereich der Verbindungsglieder 12, 13, an dem Gleitelemente 14, 15 befestigt sind, in jeweils einer Kulisse 16, 17 der Konsole 4 geführt sind. Um beispielsweise eine Schwenkbewegung des Bedienpults 1 nach links durchzuführen, bewegt sich das durch das Bedienelement 7 gelöste Gleitelemente 14 entlang der Kulisse 16, wobei das Bedienpult 1 um eine Schwenkachse 19 am Gleitelement 15 schwenkt.

Ebenfalls ist in Figur 7 gut zu erkennen, dass sich das Bedienelement 7 noch nahe dem Gegenlager 8 befindet, d.h. das Bedienelement 7 noch unverriegelt und das Verbindungsglied 12 nicht fixiert. Um die zuvor beschriebene Schwenkbewegung des Bedienpults 1 nach links zu ermöglichen, wird also das rechte Bedienelement 7 betätigt und damit das rechte Verbindungsglied 12 vom Hauptträger 11 gelöst, um diesem eine freie Bewegung entlang der Kulisse 16 zu ermöglichen. Dabei bewegt sich auch das linke Verbindungsglied 13 entlang der linken Kulisse 17, wobei das Bedienpult 1 eine Schwenkbewegung um die Schwenkachse 19 am linken Gleitelement 15 ausführt.

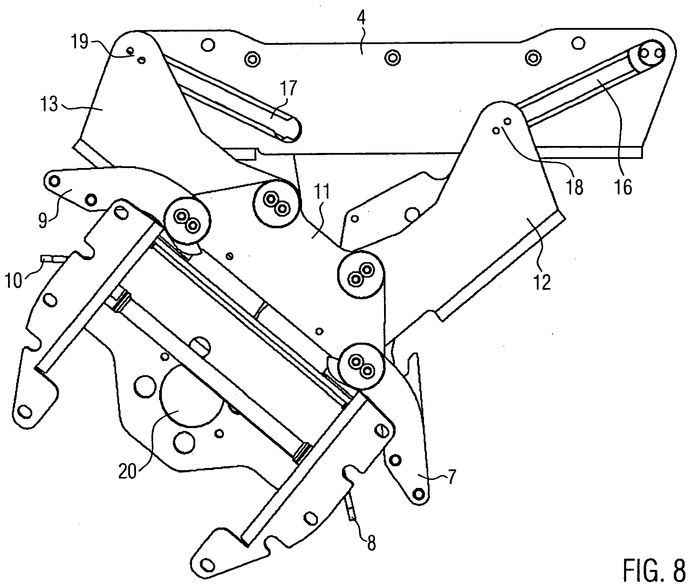

Figur 8 zeigt das nach links geschwenkte Bedienpult 1 aus Figur 7 in der Draufsicht, wobei sich das rechte Bedienelement 7 in einer verriegelten Stellung befindet. D.h., dass eine weitere Schwenkbewegung des Bedienpults 1 durch eine Fixierung des rechten Verbindungsglieds 12 mittels des Bedienelements 7 ausgeschlossen ist. Die Anordnung aus Konsole 4, Hauptträger 11 und den Verbindungsgliedern 12, 13 weist keinen Freiheitsgrad auf, so dass das Bedienpult 1 sicher fixiert ist.

Eine Schwenkbewegung des Bedienpults 1 nach rechts erfolgt analog zu der oben beschriebenen Vorgehensweise durch ein Lösen des linken Bedienelements 9 und einer daraus resultierenden Schwenkbewegung um eine Schwenkachse 18 an dem rechten Gleitelement 14. Beide Schwenkbewegungen, d.h. um die Schwenkachse 18 und die Schwenkachse 19, sind jeweils stufenlos durchführbar.

Des Weiteren kann an dem Hauptträger 20 des Bedienpults 1 eine optionale Aufnahme 20 für eine Lenksäule vorgesehen sein. Entlang der Schwenkachsen 18, 19 kann das Bedienpult 1 auch in vertikaler Richtung entriegelt und höhenverstellt werden, um den Bedienkomfort für den Bediener zusätzlich zu erhöhen.

## Patentansprüche

1. Straßenfertiger, mit einem wahlweise um eine erste und eine zweite Schwenkachse (18, 19) schwenkbaren Bedienpult (1), das einen Hauptträger (11), eine Konsole (4) und pro Schwenkachse (18, 19) wenigstens ein Verbindungselement (12, 13) aufweist, wobei für die erste und die zweite Schwenkachse (18, 19) jeweils ein Bedienelement (7, 9) zum separaten Entriegeln und/oder Verriegeln einer Schwenkbarkeit um die jeweilige Schwenkachse (18, 19) vorgesehen ist, und durch das Entriegeln der Schwenkbarkeit um die jeweilige Schwenkachse (18, 19) der Hauptträger (11) relativ zu der Konsole (4) bewegbar ist, **dadurch gekennzeichnet, dass** für jedes der Bedienelemente (7, 9) ein Gegenlager (8, 10) an dem Bedienpult (1) befestigt ist, das als Auflage für einen Daumen oder einen Handballen dient, wenn das Bedienelement (7) betätigt wird, und dass die Schwenkachsen (18, 19) durch ein Heranziehen des jeweiligen Bedienelements (7, 9) in Richtung des jeweiligen Gegenlagers (8, 10) entriegelbar und das Bedienpult (1) in dieselbe Richtung verschwenkbar ist, wobei sich die Bedienelemente (7, 9) über eine Länge erstrecken, die im Wesentlichen der Bauhöhe des Hauptträgers (11) entspricht, um einem Fahrzeuglenker eine große Angriffsfläche zu bieten, um das Bedienpult (7) in eine bestimmte Schwenkrichtung zu drücken und/oder zu ziehen.

2. Straßenfertiger nach Anspruch 1, **dadurch gekennzeichnet, dass** die erste und die zweite Schwenkachse (18, 19) parallel zueinander ausgerichtet sind.

3. Straßenfertiger nach Anspruch 1 oder 2, **dadurch gekennzeichnet, dass** die erste und die zweite Schwenkachse (18, 19) jeweils ein Gleitelement (14, 15) aufweisen, das in einer Kulisse (16, 17) geführt ist.

4. Straßenfertiger nach Anspruch 3, **dadurch gekennzeichnet, dass** die Gleitelemente (14, 15) und/oder die Kulisse (16, 17) eine Oberflächenbeschichtung aus einer Nickel-PTFE-Dispersion aufweisen.

5. Straßenfertiger nach einem der vorangehenden Ansprüche, **dadurch gekennzeichnet, dass** die Bedienelemente (7, 9) für die erste und die zweite Schwenkachse (18, 19) separat bedienbar sind.

6. Straßenfertiger nach einem der vorangehenden Ansprüche, **dadurch gekennzeichnet, dass** das Bedienpult (1) in Querrichtung des Straßenfertigers entlang von Schienen (5) seitenverstellbar ist.

7. Straßenfertiger nach einem der vorangehenden Ansprüche, **dadurch gekennzeichnet, dass** das Bedienpult (1) in axialer Richtung wenigstens einer der Achsen (18, 19) höhenverstellbar ist.

8. Straßenfertiger nach einem der vorangehenden Ansprüche, **dadurch gekennzeichnet, dass** die Schwenkachsen (18, 19) durch ein Wegdrücken des jeweiligen Bedienelements (7, 9) von dem jeweiligen Gegenlager (8, 10) weg verriegelbar sind.

9. Straßenfertiger nach einem der vorangehenden Ansprüche, **dadurch gekennzeichnet, dass** die Schwenkachsen (18, 19) weitgehend symmetrisch zu einer Mittelachse des Bedienpults (1) ausgerichtet sind.

10. Straßenfertiger nach einem der vorangehenden Ansprüche, **dadurch gekennzeichnet, dass** das Bedienpult (1) stufenlos verschwenkbar ist.

11. Straßenfertiger nach einem der vorangehenden Ansprüche, **dadurch gekennzeichnet, dass** das Bedienpult (1) ferner um eine horizontale Kippachse (K) schwenkbar ist.

12. Straßenfertiger nach Anspruch 11, **dadurch gekennzeichnet, dass** eine Fußtaste (F) zum Lösen einer Verriegelung der Schwenkbarkeit um die horizontale Kippachse (K) vorgesehen ist.

## Claims

1. Road finishing machine with a control panel (1) that can be selectively swiveled about a first and a second swivel pin (18, 19) the control panel (1) having a main support (11), a bracket (4), and at least one connecting element (12, 13) per swivel pin (18, 19), wherein for each of the first and the second swivel pins (18, 19) one operational control (7, 9) is provided for separately unlocking and/or locking a swiveling capacity about the respective swivel pin (18, 19), and wherein the main support (11) is movable relative to the bracket (4) by unlocking the swiveling capacity about the respective swivel pin (18, 19) **characterized in that** for each of the operational controls (7, 9), a counter surface (8, 10), serving as a support for a thumb or a heel of a hand while the operational control (7) is operated, is fixed to the control panel (1), and that the swivel pins (18, 19) can be unlocked by pulling the respective operational control (7, 9) in the direction of the respective counter surface (8, 10), and the control panel (1) can be swiveled into the same direction, wherein the operational controls (7, 9) extend over a length which essentially corresponds to the height of the main support (11), offering a large working surface for a driver to push and/or pull the control panel (7) into a certain swiveling direction.

2. Road finishing machine according to claim 1, **characterized in that** the first and the second swivel pins (18, 19) are oriented in parallel.

3. Road finishing machine according to claim 1 or 2, **characterized in that** the first and the second swivel pins (18, 19) each have a sliding element (14, 15) which is guided in a linkage (16, 17).

4. Road finishing machine according to claim 3, **characterized in that** the sliding elements (14, 15) and/or the linkage (16, 17) have a surface coating made of a nickel-PTFE dispersion.

5. Road finishing machine according to one of the preceding claims, **characterized in that** the operational controls (7, 9) for the first and the second swivel pins (18, 19) can be operated separately.

6. Road finishing machine according to one of the preceding claims, **characterized in that** the control panel (1) can be laterally adjusted in the transverse direction of the road finishing machine along rails (5).

7. Road finishing machine according to one of the preceding claims, **characterized in that** the control panel (1) can be height adjusted in the axial direction of at least one of the pins (18, 19).

8. Road finishing machine according to one of the preceding claims, **characterized in that** the swivel pins (18, 19) can be locked by pushing the respective operational control (7, 9) away from the respective counter surface (8, 10).

9. Road finishing machine according to one of the preceding claims, **characterized in that** the swivel pins (18, 19) are oriented largely symmetrically to a central axis of the control panel (1).

10. Road finishing machine according to one of the preceding claims, **characterized in that** the control panel (1) can be swiveled continuously.

11. Road finishing machine according to one of the preceding claims, **characterized in that** the control panel (1) can be furthermore swiveled about a horizontal tipping axis.

12. Road finishing machine according to claim 14, **characterized in that** a pedal (F) for releasing a lock of the swiveling capacity about the horizontal tipping axle is provided.

## Revendications

1. Finisseur de route comprenant un pupitre de commande (1), qui peut pivoter sélectivement autour d'un premier et d'un deuxième axe de pivotement (18, 19), et qui comporte un support principal (11), une console (4) et, par axe de pivotement (18, 19), au moins un élément de liaison (12, 13), finisseur de route
dans lequel il est prévu, respectivement pour le premier et le deuxième axe de pivotement (18, 19), un élément de manoeuvre (7, 9) respectif pour le déverrouillage et/ou le verrouillage séparé d'une possibilité de pivotement autour de l'axe de pivotement (18, 19) respectif, et le déverrouillage de la possibilité de pivotement autour de l'axe de pivotement (18, 19) respectif, entraîne la mobilité du support principal (11) par rapport à la console (4),
**caractérisé en ce que** sur le pupitre de commande (1) est fixée, pour chacun des éléments de manoeuvre (7, 9), une butée conjuguée (8, 10), qui sert d'appui pour un pouce ou une paume de main lorsque l'élément de manoeuvre (7) est actionné, et **en ce que** les axes de pivotement (18, 19) peuvent être déverrouillés en tirant l'élément de manoeuvre (7, 9) respectivement correspondant en direction de la butée conjuguée (8, 10) respective, et le pupitre de commande (1) peut alors pivoter dans cette même direction, les éléments de manoeuvre (7, 9) s'étendant sur une longueur qui correspond sensiblement à la dimension en hauteur du support principal (11), en vue d'offrir à un conducteur du véhicule, une grande surface de prise pour pousser et/ou tirer le poste de commande (1) dans une position de pivotement déterminée.

2. Finisseur de route selon la revendication 1,
**caractérisé en ce que** le premier et le deuxième axe de pivotement (18, 19) sont orientés parallèlement l'un à l'autre.

3. Finisseur de route selon la revendication 1 ou la revendication 2, **caractérisé en ce que** le premier et le deuxième axe de pivotement (18, 19) présentent respectivement un élément de glissement (14, 15), qui est guidé dans une coulisse (16, 17).

4. Finisseur de route selon la revendication 3,
**caractérisé en ce que** les éléments de glissement (14, 15) et/ou la coulisse (16, 17) comportent un revêtement de surface constitué d'une dispersion de nickel-PTFE.

5. Finisseur de route selon l'une des revendications précédentes, **caractérisé en ce que** les éléments de manoeuvre (7, 9) pour le premier et le deuxième axe de pivotement (18, 19), peuvent être manoeuvrés séparément.

6. Finisseur de route selon l'une des revendications précédentes, **caractérisé en ce que** le pupitre de commande (1) est déplaçable, à savoir réglable latéralement, dans la direction transversale du finisseur de route, le long de glissières (5).

7. Finisseur de route selon l'une des revendications précédentes, **caractérisé en ce que** le pupitre de commande (1) est déplaçable, à savoir réglable en hauteur, dans la direction axiale d'au moins l'un des axes (18, 19).

8. Finisseur de route selon l'une des revendications précédentes, **caractérisé en ce que** les axes de pivotement (18, 19) peuvent être verrouillés, en repoussant l'élément de manoeuvre (7, 9) respectif de la butée conjuguée (8, 10) respective.

9. Finisseur de route selon l'une des revendications précédentes, **caractérisé en ce que** les axes de pivotement (18, 19) sont orientés dans une large mesure de manière symétrique à un axe médian du pupitre de commande (1).

10. Finisseur de route selon l'une des revendications précédentes, **caractérisé en ce que** le pupitre de commande (1) peut pivoter de manière continue.

11. Finisseur de route selon l'une des revendications précédentes, **caractérisé en ce que** le pupitre de commande (1) peut, en outre, pivoter autour d'un axe de basculement horizontal (K).

12. Finisseur de route selon la revendication 11,
**caractérisé en ce qu'**il est prévu une pédale (F) pour débloquer un verrouillage de la possibilité de pivotement autour de l'axe de basculement horizontal (K).
